# EUROPÄISCHE PATENTSCHRIFT

(11) **EP 2 766 245 B1**
(45) Veröffentlichungstag und Bekanntmachung des Hinweises auf die Patenterteilung: **14.12.2016**
(21) Anmeldenummer: 12778043.5
(22) Anmeldetag: 10.10.2012
(51) Int. Cl.: B62D 21/11

(54) **HILFSRAHMEN FÜR KRAFTFAHRZEUGE**
SUBFRAME FOR MOTOR VEHICLES
CHÂSSIS AUXILIAIRE POUR VÉHICULES AUTOMOBILES

(30) Priorität: 14.10.2011 DE 102011116155
(43) Veröffentlichungstag der Anmeldung: 20.08.2014
(73) Patentinhaber: Audi AG, 85045 Ingolstadt (DE)
(72) Erfinder: LEIBL, Peter, 85077 Manching (DE)
(86) Internationale Anmeldenummer: PCT/EP2012/004243
(87) Internationale Veröffentlichungsnummer: WO 2013/053469

(56) Entgegenhaltungen:
- EP-A2- 1 035 003
- DE-A1-102005 011 974
- FR-A1- 2 870 195

## Beschreibung

Die vorliegende Erfindung betrifft einen Hilfsrahmen für Kraftfahrzeuge gemäß dem Oberbegriff des Patentanspruchs 1.

Die EP 1 035 003 A2 offenbart einen solchen Hilfsrahmen. Gattungsgemäße Hilfsrahmen sind über Lager oder starr am Aufbau des Kraftfahrzeugs befestigt und nehmen sowohl das Antriebsaggregat als auch über entsprechende, konsolenförmige Aufnahmen Lenker der Radaufhängungen auf. Die Tragholme des Hilfsrahmens können teils aus Rohrprofilen, teils aber auch aus zwei Halbschalen bestehen, die über Fügestellen wie zum Beispiel Schweißnähte fest zusammengefügt sind. Liegen diese Fügestellen in dem im Fahrbetrieb als Biegebalken belasteten Tragholm im Bereich dessen Obergurtes und Untergurtes, so beeinflussen sie die Festigkeit und damit die erforderliche Wandstärke der Halbschalen.

Durch die DE 196 04 942 A1 ist eine zweischalige Konstruktion eines Tragholms für Hilfsrahmen bekannt, bei dem die Halbschalen U-förmig ausgebildet und aufeinander aufgesetzt sind, so dass die Fügestellen etwa im mittleren Bereich des Tragholms und vom Obergurt und Untergurt entsprechend entfernt liegen. Damit sind zwar die Fügestellen in einen weniger zug- und druckbelasteten Spannungsbereich verlegt, jedoch sind die konstruktiven Möglichkeiten bei U-förmigen Halbschalen eingeschränkt, zum Beispiel betreffend die unmittelbare Anformung von Aufnahmekonsolen, etc. Aufgabe der Erfindung ist es, einen Hilfsrahmen für Kraftfahrzeuge vorzusehen, bei dem zumindest einer der Tragholme mit baulich geringem Aufwand an die auftretenden Belastungskriterien angepasst werden kann.

Die Lösung dieser Aufgabe wird mit den Merkmalen des Patentanspruchs 1 erreicht. Vorteilhafte Ausgestaltungen sind in den Unteransprüchen angeführt.

Gemäß Anspruch 1 wird ein Hilfsrahmen für Kraftfahrzeuge vorgeschlagen, der sich aus zwei, im montierten Zustand im Wesentlichen in Fahrzeuglängsrichtung verlaufenden, längs ausgerichteten Tragholmen und zumindest einem quer verlaufenden Tragholm zusammensetzt und der Aufnahmen für Anbauteile, insbesondere für ein Antriebsaggregat und/oder für Lenkeranordnungen der Radaufhängung, aufweist, wobei zumindest ein Tragholm aus Halbschalen besteht, die mittels mehrerer in Tragholmlängsrichtung gegenüberliegender Fügeverbindungen zusammengefügt sind und die einen tragholmseitigen Ober- und Untergurt sowie diese verbindende Seitenwände ausbilden. Erfindungsgemäß ist der wenigstens eine durch die Halbschalen gebildete Tragholm in einem in Tragholmlängsrichtung gesehen mittleren Bereich derart hinsichtlich seiner Außenabmessungen und/oder hinsichtlich seines Außenquerschnittes gegenüber den sich an diesen mittleren Bereich nach außen hin anschließenden Tragholmaußenabschnitten verringert, dass dieser am Tragholm einen mittlerer Verjüngungs- und/oder Einschnürungsabschnitt ausbildet, wobei zumindest eine der einander in Tragholmlängsrichtung gegenüberliegenden Fügestellen wenigstens entlang des mittleren Bereiches des Tragholmes in einem von den Gurtbereichen beabstandeten Seitenwandbereich verläuft und eine seitenwandseitige Fügestelle ausbildet.

Durch einen derart verjüngten bzw. eingeschnürten Mittenbereich des wenigstens einen in Schalenbauweise hergestellten Tragholmes werden die auftretenden Deformationen und damit Belastungen des Hilfsrahmens gezielt in diesen mittleren Bereich gelegt, wobei der Obergurt und der Untergurt durch die gleichzeitige Verlagerung wenigstens eines Teils der Fügestellen dieses mittleren Bereiches in den Bereich der vom Obergurt und Untergurt beabstandeten Seitenwände des Tragholmes zudem weiter vorteilhaft gezielt auf Belastungen bis zu deren Streckgrenze ausgelegt werden können. Daraus resultiert ein insgesamt spannungsoptimierter Aufbau des jeweiligen Trägers bzw. Tragholmes und damit ein hinsichtlich der Belastungen optimierter Aufbau des Hilfsrahmens. Denn durch die Verlagerung der Belastungszentren in den verjüngten Mittenbereich des Tragholmes wird beispielsweise erreicht, dass die besonders belasteten Außenbereiche des Hilfsrahmens, die Fügestellen der Lenkeraufnahmen und wenigstens an einem Längsholm angebundener Querholm gezielt entlastet werden können.

Gemäß einer konkreten erfindungsgemäßen Ausgestaltung wird vorgeschlagen, dass der Tragholm in baulich und funktionell günstiger Weise nach außen zu in gegenüber dem mittleren Bereich größer dimensionierte, kopfförmige Abschnitte als Tragholmaußenabschnitte übergeht, an denen unmittelbar Aufnahmen für Lenker der Radaufhängungen ausgebildet sind. Damit werden die größer und stabil dimensionierten Außenabschnitte des Tragholms in vorteilhafter Funktion gleichzeitig zur Anbindung von Funktionsteilen verwendet.

Gemäß einer weiteren bevorzugten Ausgestaltung soll die Höhe dieser Tragholmaußenabschnitte des Tragholms in Fahrzeughochachsenrichtung gesehen wenigstens das 1,5-fache der Höhe des mittleren Bereichs betragen. Insbesondere zur Erzielung einer gleichmäßigen Spannungsverteilung in der Tragholmverbindung wird des Weiteren definiert, dass wenigstens eine seitenwandseitige Fügestelle entlang des mittleren Bereiches des Tragholmes in einem von den Gurtbereichen beabstandeten Seitenwandbereich verläuft und dann nach außen zu den Tragholmaußenabschnitten hin wieder in Richtung eines Gurtbereiches verlagert ist, insbesondere in eine gurtseitige Fügeverbindung übergehen. Die Verlagerung kann zum Beispiel über ca. 1/3 der Länge des Tragholms eingearbeitet sein und nach außen zu jeweils bis gegen Null abnehmen.

Grundsätzlich kann es dabei je nach Lage der Belastungszentren ausreichend sein, dass bei einander in Tragholmlängsrichtung gegenüberliegenden Fügestellen die Halbschalen so zusammengefügt sind, dass eine erste Fügestelle wenigstens im mittleren Bereich im Bereich der Seitenwand angeordnet ist und dementsprechend eine seitenwandseitige Fügestelle ausbildet, während eine gegenüberliegende zweite Fügestelle im mittleren Bereich gurtseitig verläuft und eine gurtseitige Fügeverbindung ausbildet. In diesem Fall kann dann konkret vorgesehen sein, dass eine erste Halbschale U-förmig ausgebildet ist, während die zweite Halbschale L-förmig ausgebildet ist, wobei einer der L-Schenkel der L-förmigen Halbschale einen Ober- oder Untergurt ausbildet, an den einer der U-Schenkel der U-förmigen Halbschale angrenzt und dementsprechend in diesem Angrenzungsbereich die zweite, gurtseitig verlaufende Fügestelle ausbildet, und wobei die beiden weiteren Schenkel der U-förmigen und der L-förmigen Halbschale in einem definierten Seitenwandbereich aneinandergrenzen und die erste, seitenwandseitige Fügestelle ausbilden, die um ein definiertes Maß von den Gurten beabstandet ist. Bevorzugt kann hierbei vorgesehen sein, dass eine der Halbschalen eine seitenwandseitig, vorzugsweise schräg, verlaufende Abkantung ausbildet, die mit dem zugeordneten Seitenwand-Schenkel der anderen Halbschale verschweißt ist.

Besonders bevorzugt für insbesondere sehr hohe Belastungen ist jedoch ein Aufbau, bei dem in vorteilhafter, weiterer Ausgestaltung der Erfindung die Halbschalen des Tragholmes jeweils U-förmig ausgebildet sind und jeweils einen vom jeweiligen Gurtbereich abragenden sowie einen in etwa vertikal Seitenwandbereich des Tragholms ausbildenden ersten Schenkel (Seitenwand-Schenkel) und weiter jeweils einen zweiten Schenkel aufweisen, wobei der zweite Schenkel vom Gurtbereich auf der dem Seitenwand-Schenkel gegenüberliegenden Seite abragt und eine vorzugsweise schräg verlaufende Abkantung ausbildet, die mit dem Seitenwand-Schenkel der jeweils anderen Halbschale stoffschlüssig verbunden, insbesondere verschweißt ist, so dass die Fügestellen auf den gegenüberliegenden Seiten des Tragholmes jeweils um ein definiertes Maß von den Gurten beabstandet sind. Dies bewirkt praktisch eine dem jeweiligen Obergurt bzw. Untergurt zu gerichtete Verjüngung des Tragholms in Hochrichtung. Je nach Winkelstellung ist die Breite von Ober- und Untergurt und somit die Steifigkeit und Deformation in diesem Bereich variabel einstellbar. Beispielsweise schließen die Seitenwände mit dem Obergurt oder Untergurt jeweils etwa 90 Grad ein und verlaufen die Abkantungen schräg zur jeweiligen Seitenwand.

Besonders bevorzugt ist dabei insbesondere in fertigungstechnischer Sicht eine Ausgestaltung, bei der die Halbschalen als Gleichteile ausgebildet sind, so dass die einander gegenüberliegenden Fügestellen jeweils um ein gleiches Maß von dem die jeweilige Abkantung der Fügestelle aufweisenden Gurtbereich beabstandet sind. Zudem können mit einem derartigen Aufbau besonders einfach definierte Belastungsfälle beherrscht werden.

Des Weiteren können in baulich einfacher und fertigungstechnisch günstiger Weise, da kein Schieberschnitt im Werkzeug erforderlich ist, die Seitenwände des Tragholms jeweils stumpf an quer dazu ausgerichtete Flansche der Abkantungen angesetzt und mit diesen verschweißt sein.

Das Maß (s), um das die wenigstens eine seitenwandseitige Fügestelle im mittleren Bereich des Tragholmes von dem Obergurt und dem Untergurt entfernt ist, beträgt jeweils in etwa 15mm bis in etwa maximal die Hälfte der Tragholmhöhe (h). Damit können besonders zuverlässige und robuste Hilfsrahmenkonstruktionen erzielt werden, die höchsten Belastungsfällen standhalten. Das Gleiche gilt analog für einen Aufbau, bei dem alternativ oder zusätzlich hierzu vorgesehen ist, dass die quer zur Längserstreckung des Tragholmes gemessene Breite des Obergurts und des Untergurts jeweils in etwa 2/3 der gesamten Breite des Tragholms im mittleren Bereich beträgt.

Ein Ausführungsbeispiel der Erfindung ist im Folgenden anhand der beigefügten, schematischen Zeichnung näher erläutert.

### Es zeigen:

- Fig. 1: eine raumbildliche Ansicht eines Hilfsrahmens für Kraftfahrzeuge, mit zwei in Fahrtrichtung bzw. Fahrzeuglängsrichtung längs und hier beispielhaft zwei quer dazu ausgerichteten Tragholmen, die hier beispielhaft Aufnahmen für Hilfsrahmenlager und Lenkeranbindungen aufweisen und von denen wenigstens der in Fahrtrichtung hintere, quer verlaufende Tragholm mehr- bzw. hier beispielhaft zweischalig ausgeführt ist;
- Fig. 2: eine Ansicht Y der Fig. 1 auf den zweischaligen Tragholm mit kopfartigen Endabschnitten und einem Längsmittelbereich, in dem die Fügestellen von der Ebene des Obergurtes und des Untergurtes weg verlagert sind;
- Fig. 3: einen Querschnitt durch den Tragholm entlang der Linie III - III der Fig. 2 gemäß einer ersten Ausführungsform; und
- Fig. 4: einen Querschnitt durch den Tragholm entlang der Linie III - III der Fig. 2 gemäß einer zweiten Ausführungsform.

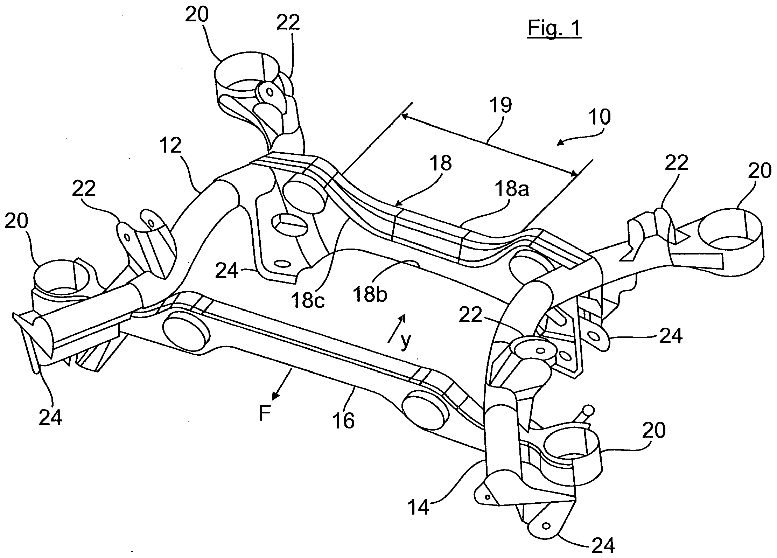

Die Fig. 1 zeigt einen Hilfsrahmen 10 für Kraftfahrzeuge, der sich im Wesentlichen aus zwei längs ausgerichteten Tragholmen 12, 14 und zwei quer verlaufenden Tragholmen 16, 18 aus bevorzugt Stahl bzw. Metall zusammensetzt, die an ihren Kreuzungspunkten fest miteinander verbunden, insbesondere miteinander verschweißt sind. Der Pfeil F gibt die Fahrtrichtung bzw. Fahrzeuglängsrichtung des Kraftfahrzeugs bzw. die Einbauposition des Hilfsrahmens 10, zum Beispiel im Hinterwagen, an.

An den Trägern bzw. Tragholmen 12, 14, 16, 18 sind beispielhaft, wie aus Fig. 1 ersichtlich ist, hülsenförmige Aufnahmen 20 angeformt, die zur Vierpunktlagerung des Hilfsrahmens 10 über Hilfsrahmenlager am Aufbau (nicht dargestellt) des Kraftfahrzeugs dienen.

Ferner sind weiter beispielhaft obere und untere, konsolenförmige Aufnahmen 22, 24 an den Tragholmen 12, 14, 18 vorgesehen, über die nicht dargestellte Lenker der zum Beispiel hinteren Radaufhängung des Kraftfahrzeugs insbesondere unter Zwischenschaltung von Gummi-Metall-Lagern angelenkt sind.

Die oberen Aufnahmen 22 (für die obere Lenkerebene) und die vorderen, unteren Aufnahmen 24 (für die untere Lenkerebene) sind zum Beispiel an die längsverlaufenden Tragholme 12, 14 angeschweißt oder in diese eingeformt, wobei die Tragholme zum Beispiel durch ein im Wesentlichen rohrförmiges, geschlossenes Profil gebildet sein können. Die unteren, hinteren Lenkeraufnahmen 24 sind bevorzugt unmittelbar an den quer verlaufenden, hinteren Tragholm 18 angeformt, was nachfolgend noch ausgeführt wird.

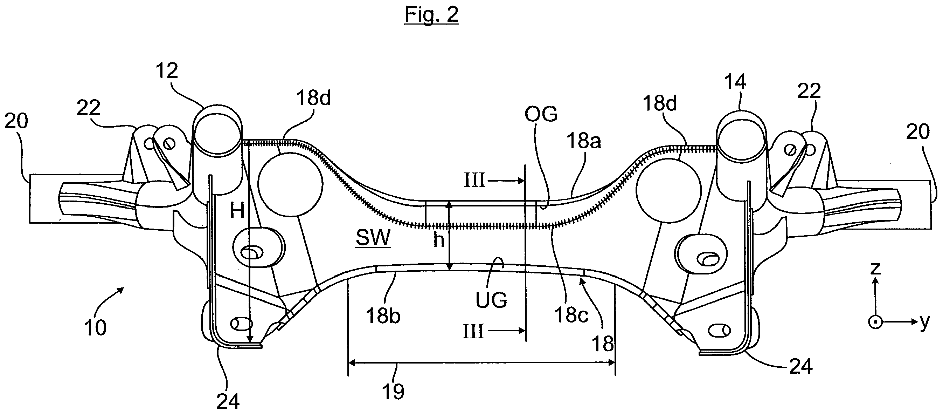

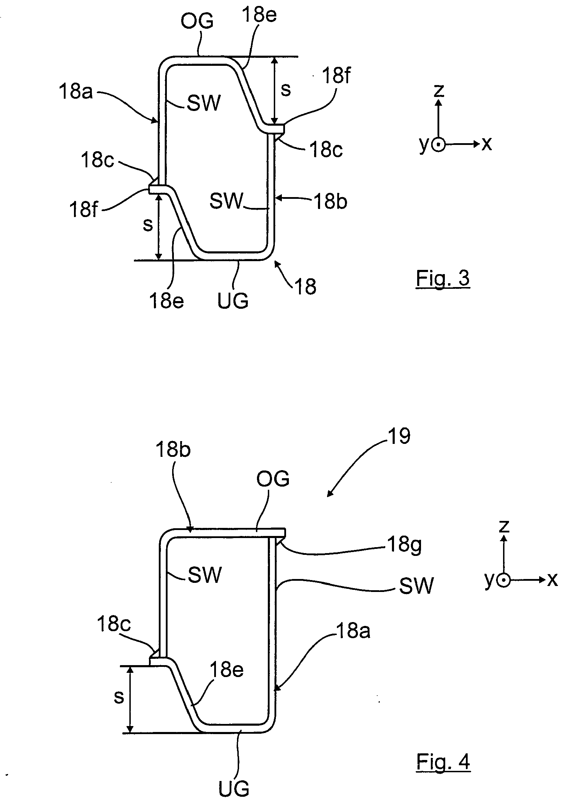

Die quer verlaufenden Tragholme 16, 18 sind im Wesentlichen rohrförmig bzw. rechteckförmig und zweischalig gefertigt, wobei an dem vorderen Tragholm 16 hier beispielhaft die Aufnahmen 20 für die Hilfsrahmenaufhängung angeformt sind. Der vordere Tragholm 16 kann ggf. ähnlich dem hinteren Tragholm 18 gefertigt sein, der im Folgenden anhand der Fig. 2 und 3 detailliert beschrieben wird:
Der hintere Tragholm 18 setzt sich aus zwei Halbschalen 18a, 18b (Fig. 3) zusammen, die im Wesentlichen symmetrisch zueinander geformt sind und über Fügestellen bzw. Schweißnähte 18c miteinander fest verbunden sind. Die längs verlaufenden Tragholme 12, 14 sind wie die Fig. 2 zeigt mit den äußeren Abschnitten 18d des Tragholms 18 fest verschweißt.

Der Tragholm 18 weist einen mittleren, eingeschnürten bzw. verjüngten Bereich 19 (ca. 1/3 seiner Gesamtlänge) mit einer Höhe h (in Fahrzeughochachsenrichtung z gesehen) und einer definierten Breite auf, der nach außen zu in die kopfförmigen Abschnitte 18d mit der in Fahrzeughochachsenrichtung z größeren Höhe H übergeht. Das Verhältnis H : h beträgt beispielsweise ca. 1,5.

An die äußeren Abschnitte 18d sind, wie aus Fig. 2 ersichtlich ist, die Aufnahmen 24 für Lenker der Radaufhängung unmittelbar eingeformt und die längsverlaufenden Tragholme 12, 14 angebunden bzw. angeschweißt.

Die U-förmig ausgebildeten Halbschalen 18a, 18b des Tragholms 18 weisen jeweils eine im Wesentlichen vertikal ausgerichtete und durch einen ersten Halbschalenschenkel gebildete, in etwa vertikale Seitenwand SW und einen hier um 90Grad dazu abgewinkelten Obergurt OG oder Untergurt UG auf und sind über die Schweißnähte 18c fest miteinander verbunden.

Im mittleren Bereich 19 hingegen (Fig. 3) sind die Gurte (OG, UG) mit hier beispielhaft schräg zu den Seitenwänden SW verlaufenden Abkantungen 18e als zweite Halbschalenschenkel versehen, die an in ihrer Höhe (bezogen auf die gesamte Höhe) zurückgesetzte Seitenwände SW der jeweils anderen Halbschale anschließen und dort stumpf an Flansche 18f angrenzen bzw. über die Schweißnähte 18c mit diesen fest verbunden sind.

Das Maß s, das den Abstand der durch die Schweißnähte 18c definierten seitenwandseitigen Fügestellen von den Gurten definiert, beträgt hier beispielhaft jeweils ca. 1/3 der Höhe h des Tragholms 18 im mittleren eingeschnürten bzw. verjüngten Längenbereich 19. Die verbleibende Breite der Gurte (OG, UG) in Fahrzeuglängsrichtung x gesehen beträgt beispielhaft jeweils ca. 2/3 der Gesamtbreite des Tragholms 18 im mittleren eingeschnürten bzw. verjüngten Bereich 19.

Der mittlere Bereich 19 geht, wie aus Fig. 2 ersichtlich ist, kontinuierlich in die äußeren Abschnitte 18d mit der größeren Höhe H über. Die Breite des Tragholms 18 kann nach außen zu gegebenenfalls wie in Fig. 1 dargestellt zunehmen.

Wie dies insbesondere anhand der in Fig. 2 eingezeichneten Fügestelle bzw. Schweißnaht 18c ersichtlich ist, ist diese wenigstens im mittleren verjüngten bzw. eingeschnürten Bereich 19 beiderseits von der Spannungsebene der Gurte (OG, UG) weg nach unten bzw. oben verlagert und damit aus diesem regelmäßig stark belasteten Spannungsbereich der Gurte (OG, UG) herausgelegt.

Durch den verjüngten Mittenbereich 19 und die Verlagerung der Fügestellen 18c von der Gurtoberseite und von der Gurtunterseite weg können die durch die Krafteinleitung der zum Beispiel Lenker ausgeübten Deformationen und Spannungsbelastungen vermehrt in diesen Mittenbereich 19 gelegt werden, wodurch die äußeren Abschnitte 18d des Tragholms 18 entlastet sind. Durch entsprechende Auslegung und Dimensionierung dieses Mittenbereichs 19, zum Beispiel eine Auslegung bis an die Streckgrenze des Materials, kann dann eine gezielte Krafteinleitung und Kraftableitung erzielt werden.

Die Fig. 4 zeigt schließlich einen Querschnitt durch den Tragholm entlang der Linie III - III der Fig. 2 gemäß einer zur Fig. 3 alternativen Ausführungsform, bei der bei einander in Tragholmlängsrichtung gegenüberliegenden Fügestellen 18c, 18g die Halbschalen 18a, 18b so zusammengefügt sind, dass eine erste Fügestelle im mittleren Bereich 19 im Bereich der Seitenwand SW angeordnet ist und dementsprechend eine seitenwandseitige Fügestelle 18c ausbildet, während eine gegenüberliegende zweite Fügestelle 18g im mittleren Bereich 19 gurtseitig verläuft und eine gurtseitige Fügeverbindung ausbildet.

Konkret ist hierzu die erste Halbschale 18a U-förmig ausgebildet ist, während die zweite Halbschale 18b L-förmig ausgebildet ist, wobei einer der L-Schenkel der L-förmigen Halbschale 18b hier beispielhaft einen Obergurt OG ausbildet, an den einer der U-Schenkel der U-förmigen Halbschale 18a angrenzt und dementsprechend in diesem Angrenzungsbereich die gurtseitig verlaufende Fügestelle 18g ausbildet. Die beiden weiteren Schenkel der U-förmigen und der L-förmigen Halbschale 18a, 18b grenzen in einem definierten Bereich der Seitenwand SW aneinander und bilden die erste, seitenwandseitige Fügestelle 18c aus, die um ein definiertes Maß s von den Gurten OG, UG beabstandet ist. Wie aus Fig. 4 gut ersichtlich ist, bildet eine der Halbschalen 18a eine seitenwandseitig schräg verlaufende Abkantung 18e aus, die mit dem zugeordneten Seitenwand-Schenkel der anderen L-förmigen Halbschale 18b verschweißt ist

Die Erfindung ist nicht auf die beschriebenen Ausführungsbeispiele beschränkt. Gegebenenfalls kann auch der vordere, quer verlaufende Tragholm 16 wie der hintere Tragholm 18 oder umgekehrt ausgeführt sein. Die Tragholme 12 bis 18 können aus Stahl oder gegebenenfalls aus Leichtmetall gefertigt sein. Die Fügestellen 18c können gegebenenfalls auch durch aneinander anliegende Flansche 18f und durch Punktschweißungen gebildet sein.

Der Hilfsrahmen 10 kann am Vorbau des Kraftfahrzeugs und/oder auch im Heckbereich zur Abstützung der Lenker einer Radaufhängung verwendet sein.

## Patentansprüche

1. Hilfsrahmen (10) für Kraftfahrzeuge, der sich aus zwei, im montierten Zustand im Wesentlichen in Fahrzeuglängsrichtung verlaufenden, längs ausgerichteten Tragholmen (12, 14) und zumindest einem quer verlaufenden Tragholm (16, 18) zusammensetzt und der Aufnahmen (20) für Anbauteile, insbesondere für ein Antriebsaggregat und/oder für Lenkeranordnungen der Radaufhängung, aufweist, wobei zumindest ein Tragholm (18) aus Halbschalen (18a, 18b) besteht, die mittels mehrerer in Tragholmlängsrichtung gegenüberliegender Fügestellen (18c, 18d) zusammengefügt sind und die einen tragholmseitigen Ober- und Untergurt (OG, UG) sowie diese verbindende Seitenwände (SW) ausbilden, wobei der wenigstens eine durch die Halbschalen (18a, 18b) gebildete Tragholm (18) in einem in Tragholmlängsrichtung gesehen mittleren Bereich (19) derart hinsichtlich seiner Außenabmessungen und/oder hinsichtlich seines Außenquerschnittes gegenüber den sich an diesen mittleren Bereich (19) nach außen hin anschließenden Tragholmaußenabschnitten (18d) verringert ist, dass dieser am Tragholm (18) einen mittleren Verjüngungs- und/oder Einschnürungsabschnitt ausbildet, wobei zumindest eine der einander in Tragholmlängsrichtung gegenüberliegenden Fügestellen (18c, 18d) wenigstens entlang des mittleren Bereiches (19) des Tragholmes (18) in einem von den Gurtbereichen beabstandeten Seitenwandbereich verläuft und eine seitenwandseitige Fügestelle (18c) ausbildet, **dadurch gekennzeichnet, dass** die wenigstens eine seitenwandseitige Fügestelle (18c) entlang des mittleren Bereiches (19) des Tragholmes (18) in einem von den Gurtbereichen beabstandeten Seitenwandbereich verläuft und dann nach außen zu den Tragholmaußenabschnitten (18d) hin wieder in Richtung eines Gurtbereiches verlagert ist, insbesondere in eine gurtseitige Fügeverbindung übergeht.

2. Hilfsrahmen nach Anspruch 1, **dadurch gekennzeichnet, dass** der Tragholm (18) nach außen zu in gegenüber dem mittleren Bereich (19) größer dimensionierte, kopfförmige Abschnitte als Tragholmaußenabschnitte (18d) übergeht, an denen unmittelbar Aufnahmen (24) für Lenker der Radaufhängungen ausgebildet sind.

3. Hilfsrahmen nach Anspruch 2, **dadurch gekennzeichnet, dass** die Höhe (H) der Tragholmaußenabschnitte (18d) des Tragholms (18) in Fahrzeughochachsenrichtung gesehen wenigstens das 1,5-fache der Höhe (h) des mittleren Bereichs (19) beträgt.

4. Hilfsrahmen nach einem der vorhergehenden Ansprüche, **dadurch gekennzeichnet, dass** bei einander in Tragholmlängsrichtung gegenüberliegenden Fügestellen (18c, 18g) die Halbschalen (18a, 18b) so zusammengefügt sind, dass eine erste Fügestelle wenigstens im mittleren Bereich (19) im Bereich der Seitenwand (SW) angeordnet ist und dementsprechend eine seitenwandseitige Fügestelle (18c) ausbildet, während eine gegenüberliegende zweite Fügestelle (18g) im mittleren Bereich (19) gurtseitig verläuft und eine gurtseitige Fügeverbindung ausbildet.

5. Hilfsrahmen nach Anspruch 4, **dadurch gekennzeichnet, dass** eine erste Halbschale (18a) U-förmig ausgebildet ist, während die zweite Halbschale (18b) L-förmig ausgebildet ist, wobei einer der L-Schenkel der L-förmigen Halbschale (18b) einen Ober- oder Untergurt (OG, UG) ausbildet, an den einer der U-Schenkel der U-förmigen Halbschale (18a) angrenzt und dementsprechend in diesem Angrenzungsbereich die zweite, gurtseitig verlaufende Fügestelle (18g) ausbildet, und wobei die beiden weiteren Schenkel der U-förmigen und der L-förmigen Halbschale (18a, 18b) in einem definierten Seitenwandbereich (SW) aneinandergrenzen und die erste, seitenwandseitige Fügestelle (18c) ausbilden, die um ein definiertes Maß (s) von den Gurten (OG, UG) beabstandet ist, wobei bevorzugt vorgesehen ist, dass eine der Halbschalen (18a) eine seitenwandseitig, vorzugsweise schräg, verlaufende Abkantung (18e) ausbildet, die mit dem zugeordneten Seitenwand-Schenkel der anderen Halbschale (18b) verschweißt ist.

6. Hilfsrahmen nach einem der Ansprüche 1 bis 3, **dadurch gekennzeichnet, dass** die Halbschalen (18a, 18b) des Tragholmes (18) jeweils U-förmig ausgebildet sind und jeweils einen vom jeweiligen Gurtbereich (U-Basis) abragenden sowie einen in etwa vertikalen Seitenwandbereich (SW) des Tragholms ausbildenden ersten Schenkel (Seitenwand-Schenkel) und weiter jeweils einen zweiten Schenkel aufweisen, wobei der zweite Schenkel vom Gurtbereich auf der dem Seitenwand-Schenkel gegenüberliegenden Seite abragt und eine vorzugsweise schräg verlaufende Abkantung (18e) ausbildet, die mit dem Seitenwand-Schenkel der jeweils anderen Halbschale (18a, 18b) stoffschlüssig verbunden, insbesondere verschweißt ist, so dass die Fügestellen (18c) auf den gegenüberliegenden Seiten des Tragholmes (18) jeweils um ein definiertes Maß (s) von den Gurten (OG, UG) beabstandet sind.

7. Hilfsrahmen nach Anspruch 6, **dadurch gekennzeichnet, dass** die Halbschalen als Gleichteile ausgebildet sind, so dass die einander gegenüberliegenden Fügestellen (18c) jeweils um ein gleiches Maß (s) von dem die jeweilige Abkantung (18e) der Fügestelle (18c) aufweisenden Gurtbereich beabstandet sind.

8. Hilfsrahmen nach einem der Ansprüche 5 bis 7, **dadurch gekennzeichnet, dass** die Seitenwand-Schenkel des Tragholms (18) jeweils stumpf an quer dazu ausgerichtete Flansche (18f) der Abkantungen (18e) angesetzt und mit diesen verschweißt sind.

9. Hilfsrahmen nach einem der vorhergehenden Ansprüche, **dadurch gekennzeichnet, dass** das Maß (s), um das die wenigstens eine seitenwandseitige Fügestelle (18c) im mittleren Bereich (19) des Tragholmes (18) von dem Obergurt (OG) und dem Untergurt (UG) entfernt ist, jeweils in etwa 15mm bis in etwa maximal die Hälfte der Tragholmhöhe (h) beträgt.

## Claims

1. Subframe (10) for motor vehicles, which is composed of two longitudinally aligned supporting bars (12, 14) running substantially in the vehicle longitudinal direction in the assembled state and at least one supporting bar (16, 18) running transversely, and which has mounts (20) for attachments, in particular for a drive unit and/or for link assemblies of the wheel suspension, wherein at least one supporting bar (18) consists of half shells (18a, 18b) which are joined together by means of several joining points (18c, 18d) lying opposite in the supporting bar longitudinal direction and which form a supporting bar-side upper and lower belt (OG, UG) as well as side walls (SW) connecting the latter, wherein the at least one supporting bar (18) formed by the half shells (18a, 18b) is reduced in a central region (19) seen in the supporting bar (18) longitudinal direction with regard to its outer dimensions and/or with regard to its outer cross-section compared to the supporting bar outer sections (18d) connecting outwardly to this central region (19) in such a way that this forms a central tapering and/or constriction section on the supporting bar (18), wherein at least one of the joining points (18c, 18d) lying opposite one another in the supporting bar longitudinal direction runs at least along the central region (19) of the supporting bar (18) in a side wall region which is at a distance from the belt regions, and forms a side wall-side joining point (18c), **characterised in that** the at least one side wall-side joining point (18c) runs along the central region (19) of the supporting bar (18) in a side wall region which is at a distance from the belt regions and then is displaced outwards again towards the supporting bar outer sections (18d) in the direction of a belt region, in particular transfers into a belt-side joint.

2. Subframe according to claim 1, **characterised in that** the supporting bar (18) transfers outwards into head-shaped sections as supporting bar outer sections (18d), dimensioned to be larger compared to the central region (19), on which supporting bar outer sections mounts (24) are formed directly for links of the wheel suspension.

3. Subframe according to claim 2, **characterised in that** the height (H) of the supporting bar outer sections (18d) of the supporting bar (18), seen in the vehicle vertical axis direction, is at least 1.5 times the height (h) of the central region (19).

4. Subframe according to any one of the preceding claims, **characterised in that** in the case of joining points (18c, 18g) lying opposite one another in the supporting bar longitudinal direction, the half shells (18a, 18b) are joined together such that a first joining point is arranged at least in the central region (19) in the region of the side wall (SW) and forms a side wall-side joining point (18c) accordingly, whilst a second joining point (18g) lying opposite runs on the belt side in the central region (19) and forms a belt-side joint'.

5. Subframe according to claim 4, **characterised in that** a first half shell (18a) is formed to be U-shaped, whilst the second half shell (18b) is formed to be L-shaped, wherein one of the L-arms of the L-shaped half shell (18b) forms an upper or lower belt (OG, UG), which one of the U-arms of the U-shaped half shell (18a) adjoins, and correspondingly forms the second joining point (18g) running on the belt side in this adjoining region, and wherein the two further arms of the U-shaped and the L-shaped half shells (18a, 18b) adjoin each other in a defined side wall region (SW) and form the first, side wall-side joining point (18c) which is at a distance from the belts (OG, UG) by a defined value (s), wherein preferably it is provided that one of the half shells (18a) forms a folded edge (18e) running on the side wall side, preferably diagonally, said folded edge being welded to the allocated side wall arm of the other half shell (18b).

6. Subframe according to any one of claims 1 to 3, **characterised in that** the half shells (18a, 18b) of the supporting bar (18) are formed to be U-shaped respectively and have a first arm (side wall arm), projecting from the respective belt region (U-base) and forming an approximately vertical side wall region (SW) of the supporting bar respectively, and furthermore a second arm respectively, wherein the second arm projects from the belt region on the side lying opposite the side wall arm and forms a folded edge (18e) preferably running diagonally, said folded edge being firmly connected, in particular welded, to the side wall arm of the respective other half shell (18a, 18b) such that the joining points (18c) on the opposite sides of the supporting bar (18) are at a distance from the belts (OG, UG) by a defined value (s) respectively.

7. Subframe according to claim 6, **characterised in that** the half shells are formed as identical parts such that the joining points (18c) lying opposite one another are at a distance from the belt region having the respective folded edge (18e) of the joining point (18c) by an identical value (s) respectively.

8. Subframe according to any one of claims 5 to 7, **characterised in that** the side wall arms of the supporting bar (18) are positioned bluntly on flanges (18f) of the folded edges (18e) aligned transversely thereto respectively, and are welded to the latter.

9. Subframe according to any one of the preceding claims, **characterised in that** the value (s) by which the at least one side wall-side joining point (18c) is removed from the upper belt (OG) and the lower belt (UG) in the central region (19) of the supporting bar (18) is approximately 15 mm to approximately a maximum of half of the supporting bar height (h) respectively.

## Revendications

1. Faux-châssis (10) pour véhicules automobiles, qui se compose de deux longerons (12, 14) s'étendant à l'état monté globalement dans le sens de la longueur du véhicule et orientés longitudinalement et d'au moins un longeron (16, 18) s'étendant transversalement et qui comporte des logements (20) pour des pièces, notamment pour un groupe moteur et/ou pour des bras oscillants de la suspension de roue, au moins un longeron (18) étant constitué de demi-coques (18a, 18b) qui sont réunies au moyen de plusieurs points d'assemblage (18c, 18d) se faisant face dans la direction longitudinale de longeron et qui forment une membrure supérieure et une membrure inférieure (OG, UG) côté longeron ainsi que des parois latérales (SW) reliant celles-ci, l'au moins un longeron (18) formé par les demi-coques (18a, 18b) étant réduit dans une zone centrale (19) vue dans la direction longitudinale de longeron, du point de vue de ses dimensions extérieures et/ou de sa section transversale extérieure, par rapport aux tronçons extérieurs de longeron (18d) adjacents à cette zone centrale (19) vers l'extérieur, de telle sorte qu'il forme sur le longeron (18) un tronçon central de rétrécissement et/ou de resserrement, au moins un des points d'assemblage (18c, 18d) se faisant face dans la direction longitudinale de longeron s'étendant au moins le long de la zone centrale (19) du longeron (18) dans une zone de paroi latérale distante des zones de membrure et formant un point d'assemblage (18c) côté paroi latérale, **caractérisé en ce que** l'au moins un point d'assemblage (18c) côté paroi latérale s'étend le long de la zone centrale (19) du longeron (18) dans une zone de paroi latérale distante des zones de membrure et est ensuite décalé vers l'extérieur en direction des tronçons extérieurs de longeron (18d) à nouveau en direction d'une zone de membrure, se transformant notamment en une liaison côté membrure.

2. Faux-châssis selon la revendication 1, **caractérisé en ce que** le longeron (18) se transforme vers l'extérieur en des tronçons, en forme de têtes et de dimensions supérieures par rapport à la zone centrale (19), en tant que tronçons extérieurs de longeron (18d) sur lesquels sont conçus directement des logements (24) pour des bras oscillants des suspensions de roues.

3. Faux-châssis selon la revendication 2, **caractérisé en ce que** la hauteur (H) des tronçons extérieurs de longeron (18d) du longeron (18) vaut, vue dans la direction verticale du véhicule, au moins 1,5 fois la hauteur (h) de la zone centrale (19).

4. Faux-châssis selon l'une des revendications précédentes, **caractérisé en ce que**, dans le cas de points d'assemblage (18c, 18g) se faisant face dans la direction longitudinale de longeron, les demi-coques (18a, 18b) sont réunies de telle sorte qu'un premier point d'assemblage est agencé au moins dans la zone centrale (19) dans la zone de la paroi latérale (SW) et forme donc un point d'assemblage (18c) côté paroi latérale tandis qu'un deuxième point d'assemblage (18g) opposé s'étend côté membrure dans la zone centrale (19) et forme une liaison côté membrure.

5. Faux-châssis selon la revendication 4, **caractérisé en ce qu'**une première demi-coque (18a) est conçue en forme de U tandis que la deuxième demi-coque (18b) est conçue en forme de L, l'une des branches de L de la demi-coque (18b) en forme de L formant une membrure supérieure ou inférieure (OG, UG) à laquelle l'une des branches de U de la demi-coque (18a) en forme de U est adjacente et forme donc dans cette zone de contact le deuxième point d'assemblage (18g) s'étendant côté membrure, les deux autres branches des demi-coques (18a, 18b) en forme de U et en forme de L étant adjacentes l'une à l'autre dans une zone de paroi latérale (SW) définie et formant le premier point d'assemblage (18c) côté paroi latérale qui est distant des membrures (OG, UG) d'une longueur définie (s), sachant qu'il est prévu de préférence que l'une des demi-coques (18a) forme un chanfrein (18e) qui s'étend côté paroi latérale, de préférence obliquement, et qui est soudé à la branche de paroi latérale associée de l'autre demi-coque (18b).

6. Faux-châssis selon l'une des revendications 1 à 3, **caractérisé en ce que** les demi-coques (18a, 18b) du longeron (18) sont conçues chacune en forme de U et comportent chacune une première branche (branche de paroi latérale) dépassant de la zone de membrure respective (base du U) et formant une zone de paroi latérale (SW) sensiblement verticale du longeron ainsi que chacune une deuxième branche, la deuxième branche dépassant de la zone de membrure sur le côté opposé à la branche de paroi latérale et formant un chanfrein (18e) qui s'étend de préférence de manière oblique et qui est assemblé par liaison de matière, notamment soudé, à la branche de paroi latérale de l'autre demi-coque (18a, 18b) respective de telle sorte que les points d'assemblage (18c) sur les côtés opposés du longeron (18) sont distants des membrures (OG, UG) à chaque fois d'une longueur définie (s).

7. Faux-châssis selon la revendication 6, **caractérisé en ce que** les demi-coques sont conçues comme des pièces identiques de telle sorte que les points d'assemblage (18c) se faisant face sont distants, à chaque fois d'une même longueur (s), de la zone de membrure comportant le chanfrein (18e) respectif du point d'assemblage (18c).

8. Faux-châssis selon l'une des revendications 5 à 7, **caractérisé en ce que** la branche de paroi latérale du longeron (18) est placée à chaque fois bord à bord contre des ailes (18f), orientées transversalement, des chanfreins (18e) et est soudée à celles-ci.

9. Faux-châssis selon l'une des revendications précédentes, **caractérisé en ce que** la longueur (s) correspondant à la distance entre l'au moins un point d'assemblage (18c) côté paroi latérale dans la zone centrale (19) du longeron (18) et la membrure supérieure (OG) ainsi que la membrure inférieure (UG) vaut à chaque fois sensiblement 15 mm jusqu'à sensiblement au maximum la moitié de la hauteur de longeron (h).
